(19) Europäisches Patentamt
European Patent Office
Office européen des brevets

(11) **EP 2 781 623 B1**

(12) **EUROPEAN PATENT SPECIFICATION**

(45) Date of publication and mention
of the grant of the patent:
**05.04.2017 Bulletin 2017/14**

(21) Application number: **13819364.4**

(22) Date of filing: **11.07.2013**

(51) Int Cl.:
*C25B 1/00* (2006.01)     *B09B 5/00* (2006.01)
*C22B 3/04* (2006.01)     *C22B 3/26* (2006.01)
*C22B 3/44* (2006.01)     *C22B 7/00* (2006.01)
*C22B 59/00* (2006.01)    *B09B 3/00* (2006.01)
*C25C 1/00* (2006.01)     *C25C 1/06* (2006.01)
*C22B 5/00* (2006.01)

(86) International application number:
**PCT/JP2013/068963**

(87) International publication number:
**WO 2014/013929 (23.01.2014 Gazette 2014/04)**

(54) **METHOD FOR RECOVERING RARE EARTH FROM RARE EARTH ELEMENT-CONTAINING ALLOY**

VERFAHREN ZUR RÜCKGEWINNUNG SELTENER ERDE AUS EINER SELTENERDELEMENTHALTIGEN LEGIERUNG

PROCÉDÉ POUR LA RÉCUPÉRATION DE TERRE RARE À PARTIR D'ALLIAGE CONTENANT DES ÉLÉMENTS DE TERRE RARE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2012 JP 2012160681**

(43) Date of publication of application:
**24.09.2014 Bulletin 2014/39**

(73) Proprietor: **JX Nippon Mining & Metals Corporation**
**Tokyo 100-8164 (JP)**

(72) Inventors:
• **HINO Eiji**
  **Kitaibaraki-shi**
  **Ibaraki 319-1535 (JP)**
• **SHINDO Yuichiro**
  **Kitaibaraki-shi**
  **Ibaraki 319-1535 (JP)**

(74) Representative: **Hoarton, Lloyd Douglas Charles**
**Forresters**
**Skygarden**
**Erika-Mann-Strasse 11**
**80636 München (DE)**

(56) References cited:
**EP-A1- 0 042 747      JP-A- H0 748 688**
**JP-A- 2009 287 119    JP-A- 2010 285 680**
**JP-A- 2011 122 242    JP-A- 2012 087 329**
**JP-A- 2013 185 187    JP-A- 2013 204 126**
**US-A- 3 616 326**

• **XU T ET AL: "Formation cause, composition analysis and comprehensive utilization of rare earth solid wastes", JOURNAL OF RARE EARTHS, INTERNATIONAL ACADEMIC PUBLISHERS, BEIJING, CN, vol. 27, no. 6, 1 December 2009 (2009-12-01), pages 1096-1102, XP026825349, ISSN: 1002-0721 [retrieved on 2009-12-01]**

**Description**

[Technical Field]

The present invention relates to a method for recovering a rare earth element from a rare earth element-containing alloy.

BACKGROUND

In recent years, permanent magnets are being applied to various fields pursuant to significant advances, and improvement of their performance and development of new devices are being conducted day by day. In particular, the widespread use of permanent magnets in the fields of IT (information technology), automobiles, household appliances and FA (factory automation) is dramatically increasing from the perspective of energy conservation and environmental countermeasures.

Permanent magnets are used, for example, in voice coil motors of hard disk drives and optical pickup parts of DVD/CD in relation to personal computers, in micro speakers and vibration motors in relation to portable phones, and in various motors such as servo motors and linear motors in relation to household appliances and industrial devices. Moreover, over 100 permanent magnets are used in a single hybrid electric vehicle (HEV).

As permanent magnets, known are Alnico magnets, Ferrite magnets, samarium-cobalt (SmCo) magnets, neodymium (NdFeB) magnets and the like. In recent years, the R&D of neodymium magnets is particularly active, and various efforts are being exerted for achieving higher performance of such neodymium magnets.

A neodymium magnet is normally configured from a ferromagnetic $Nd_2Fe_{14}B$ intermetallic compound as its main phase, a nonmagnetic B-rich phase, a nonmagnetic Nd-rich phase, and oxides and the like as impurities. In addition, efforts for improving the magnetic properties are being exerted by adding various types of elements thereto.

Demands for neodymium magnets are expected to continue increasing significantly in light of their superior performance. Nevertheless, the rare earth metals such as Nd and Dy that are contained in a neodymium magnet entail problems in terms of supply of resources, and it is anticipated that the price of these metals will rise sharply as demands for rare earth metals increase. Thus, the development of techniques for recovering and separating rare earth metals from this kind of rare earth magnet is being actively conducted.

For example, Patent Document 1 describes recovering a rare earth element by heating and airing a rare earth element-iron-containing alloy, thereafter generating rare earth element salt and dissolving the generated rare earth element salt in a filtrate via acid leaching using strong acid, and filtering and separating the rare earth element therefrom.

Moreover, Patent Document 2 describes recovering a rare earth element by dissolving a rare earth element-iron-based magnet material in a mineral acid solution, subsequently adding a hydrofluoric acid ion-containing solution to precipitate and generate rare earth fluoride, and separating the precipitate.

Moreover, Patent Document 3 describes a method of immersing a rare earth-transition metal alloy scrap in a mineral acid ammonium salt aqueous solution, circulating gas containing oxygen therein to oxidize the scrap and obtain a precipitate containing a powder of oxide and hydroxide, separating the precipitate from the mineral acid ammonium salt aqueous solution, and recovering a rare earth element from the separated precipitate.

Moreover, Patent Document 4 describes placing a rare earth oxide scrap in a molten salt electrolytic bath, melting and separating the scrap into rare earth oxide and a magnet alloy part in the electrolytic bath, reducing the rare earth metal by electrolyzing the rare earth oxide that was melted in the electrolytic bath, alloying the magnet alloy part with the rare earth metal, and thereby recycling the product as a rare earth metal-transition metal-boron alloy.

Moreover, Patent Document 5 describes using a rare earth element-containing alloy as a positive electrode, depositing the alloys of Co, Ni, and Fe on a negative electrode based on the direct electrolysis method and adding oxalic acid to an electrolyte containing a rare earth element so as to precipitate and separate oxalate, and burning this in the atmosphere so as to separate and recover the rare earth element.

[Prior Art Documents]

[Patent Documents]

Patent Document 1: Japanese Patent Application Publication No. H5-14777
Patent Document 2: Japanese Patent Application Publication No. S62-83433
Patent Document 3: Specification of Japanese Patent No. 4287749
Patent Document 4: Japanese Patent Application Publication No. 2002-60855

Patent Document 5: Japanese Patent Application Publication No. S59-67384

EP 0 042 747 discloses a method and apparatus for treating rare-earth minerals or concentrates, wherein the mineral or concentrate in a pulverized form is mixed with an aqueous solution of an electrolyte and subjected to an electrical discharge effected in a region between a pair of electrodes in the presence of the solution.
US 3 616 326 discloses a method of separating europium from trivalent rare earth elements by passing an electrolyte containing a mixture of such elements between porous carbon electrodes at a cell potential of 2 to 2.5 volts.
XU Tao, et al.: "Formation cause, composition analysis and comprehensive utilization of rare earth solid wastes", JOURNAL OF RARE EARTHS, INTERNATIONAL ACADEMIC PUBLISHERS, BEIJING, CN, vol 27, no. 6, 1 December 2009, pages 1096-1102, XP026825349 discusses production processes and rare earth materials that could produce solid wastes on batch.

SUMMARY OF THE INVENTION

[Problems to be Solved by the Invention]

Conventionally, when a rare earth element is recovered from a rare earth magnet, acids such as hydrochloric acid, nitric acid, and sulfuric acid are used to leach the rare earth. Nevertheless, when this kind of acid leaching is performed, iron tends to become eluted, and, when the leaching rate of the rare earth is increased, the iron concentration in the leaching solution will rise, and there is a problem in that deironization cannot be performed favorably. Moreover, there is also a problem in that ferric hydroxide, which has inferior settleability and filterability, is likely to be obtained. In addition, there is a problem in that a large quantity of acid needs to be used in order to dissolve the entire rare earth magnet.

[Means for Solving the Problems]

In order to resolve the foregoing problems, as a result of intense study, the present inventors discovered that a rare earth element can be extremely easily and efficiently recovered by mixing a metal powder of a rare earth element-containing alloy with an electrolyte, and performing electrolysis in the electrolyte.
Based on the foregoing discovery, the present invention provides a method as claimed.

[Effect of the Invention]

The present invention provides a superior method of being able to extremely easily and efficiently recover a rare earth element; specifically, a rare earth element can be recovered simply by performing electrolysis in an electrolyte which contains a metal powder of a rare earth element-containing alloy obtained from scraps such as spent permanent magnets or end materials that arise during manufacture.

DETAILED DESCRIPTION OF THE INVENTION

The present invention provides a method for recovering a rare earth element from a rare earth element-containing alloy, wherein a metal powder of a rare earth element-containing alloy contained in a permanent magnet or the like is mixed in an electrolyte, and, by performing electrolysis in the electrolyte, the rare earth element is eluted.
The recovery method of the present invention can be applied to a known rare earth magnet so as long as it is a rare earth permanent magnet, and there is no particular limitation in the component composition thereof. As a known rare earth magnet, there is, for example, a Nd-Fe-B-based rare earth permanent magnet, and this permanent magnet typically has Nd, Fe, and B as its components, and additionally contains, as needed, rare earth elements such as Dy, Pr, Tb, Ho, and Sm, or transition metal elements such as Co, Cu, Cr, Ni, and Al.
The metal powder of the rare earth element-containing alloy of the present invention can be obtained, for example, from end materials, i.e., scraps that arise during the manufacture of rare earth magnets. While the scraps may be used directly if they are fine as with pulverized powders or abrasive powders, preferably, a large scrap of a certain shape such as a spent permanent magnet is used after being finely pulverized. Moreover, the recovery method of the present invention may be applied even when a part of the metal powder is an oxide. Moreover, when the power contains organic matter, preferably, such organic matter is eliminated by burning the metal powder under an atmospheric atmosphere at a temperature of 200°C or higher.
This metal powder is mixed in an electrolyte, which is prepared by mixing electric conducting salt and pure water, and electrolysis is performed in the electrolyte. As the electric conducting salt, used may be, for example, ammonium sulfate, ammonium nitrate, ammonium chloride, sodium chloride, or sodium sulfate. Moreover, as the electrodes, stainless steel, Ti, graphite or the like is used as the negative electrode, and an insoluble anode or the like is used as the positive electrode.

Here, pH of the electrolyte is preferably adjusted to be between 2 and 8. This is because, when the pH is low (acidic), much Fe becomes eluted and the filterability of the residue becomes inferior, and when the pH is high (alkaline), the elution rate of the rare earth metal will deteriorate. Moreover, in light of costs, the solution temperature of the electrolyte is preferably adjusted to be between 10 and 90°C. When the electrolysis temperature is less than 10°C, the elution rate of the rare earth metal will deteriorate, and, when the electrolysis temperature exceeds 90°C, electrolysis becomes difficult due to the evaporation of the electrolyte.

However, the electrolytic conditions described above may be suitably selected upon performing the electrolysis since the conditions will vary depending on the type, quality, amount and other factors of the material.

The present invention can cause rare earth elements to be eluted as ions by performing electrolysis in an electrolyte which contains a metal powder on the one hand, and cause metals such as iron to be eluted in the electrolyte and precipitated as ferric hydroxide, or cause a part thereof to be electrodeposited on a cathode, and thereby eliminate iron from the electrolyte on the other hand.

In order to efficiently advance this kind of electro-chemical reaction, it is important that the metal powder comes into contact with the anode as much as possible. Accordingly, for example, it would be effective to increase the number of times that the metal powder comes into contact with the anode by agitating the electrolyte, or increase the contact area by enlarging the area of the anode.

By eluting the obtained rare earth elements as ions, filtering the solution to which the rare earth elements were eluted and thereby separating the rare earth elements, and then subjecting the product to the solvent extraction method or the crystallization method, rare earth elements can be recovered.

The solvent extraction method is a method where, by adding an organic solution with an extracting agent dissolved therein to a filtrate to which rare earth ions are eluted, the extracting agent and the rare earth ions form a complex and become extracted and separated in the organic solution. As the extracting agent, used may be, for example, 2-ethylhexyl-2-ethylhexyl-phosphonic acid.

Meanwhile, the crystallization method is a method where only the rare earth sulfate is crystallized and separated from the solution by raising the solution temperature of the electrolyte of a sulfuric acid system (for instance, sodium sulfate or ammonium sulfate) since the solubility of the rare earth sulfate differs depending on the difference in temperature.

Examples

The present invention is now explained with reference to the following Examples and Comparative Examples. Note that these Examples are merely exemplifications, and the present invention is not in any way limited thereby. In other words, the present invention is limited only based on the scope of its claims, and covers various modifications other than the Examples contained herein.

(Example 1)

A rare earth-containing scrap (containing rare earth elements Nd, Dy, and Pr) containing Fe was subject to slurrying with 1 L of pure water containing sodium chloride to obtain an electrolyte, and electrolysis was performed therein. The electrolytic conditions were as follows; namely, pH of 2 to 3, electrolysis temperature of 20°C, current of 10 A, and electrolysis time of 20 hours. Consequently, the elution rate of Nd was 95%, the elution rate of Dy was 98%, and the elution rate of Pr was 94%. Fe precipitated as ferric hydroxide.

Subsequently, after the electrolysis was completed, the residue in the solution was filtered and eliminated, and the filtrate was subject to the solvent extraction method using an extracting agent of 2-ethylhexyl-2-ethylhexyl-phosphonic acid (manufactured by Daihachi Chemical Industry; Product name: "PC88A") to separate the rare earth elements, and the rare earth elements of Nd, Dy, and Pr were thereby recovered. The recovery rate was 98%.

According to the foregoing process, it was possible to efficiently recover the rare earth metals of Nd, Dy, and Pr from a rare earth-containing scrap, and also attain favorable filterability. In addition, it was possible to use the rare earth elements of Nd, Dy, and Pr as the raw material of a recycled permanent magnet.

Note that, when the metal content weight in the scrap is A and the metal content weight in the residue after electrolysis is B, the elution rate (%) indicates the ratio in which the metal had eluted in the solution, and is calculated as follows:

$$\text{elution rate (\%)} = (A - B) / A \times 100 \text{ (hereinafter the same in the Examples and the Comparative Examples).}$$

(Example 2)

A rare earth-containing scrap (containing rare earth elements Nd, Dy, and Pr) containing Fe was subject to slurrying with 1 L of pure water containing sodium sulfate to obtain an electrolyte, and electrolysis was performed therein. The electrolytic conditions were as follows; namely, pH of 4, electrolysis temperature of 20°C, current of 5 A, and electrolysis time of 20 hours. Consequently, the elution rate of Nd was 98%, the elution rate of Dy was 99%, and the elution rate of Pr was 95%. Fe had electrodeposited on a cathode.

Subsequently, after the electrolysis was completed, the residue in the solution was filtered and eliminated to obtain a rare earth-containing filtrate. This filtrate was used, the rare earth-containing scrap was once again added thereto and subject to slurrying, electrolysis was performed once again under the same conditions as those described above, and the Nd concentration in the solution was raised to roughly 100 g/l (solubility).

Subsequently, the residue in the solution was filtered and eliminated, the filtrate was heated to 60°C, the rare earth sulfate of Nd was crystallized, and the salt thereof was recovered. Here, the recovery rate was 69%. Note that, while the solution after crystallization still contains rare earths, since this solution can be used once again in an electrolytic cell, it could be said that the loss of rare earth ions is basically zero.

Moreover, as a result of repeating the foregoing electrolysis, the Dy concentration will rise and, upon rising to roughly 100 g/l (solubility), the sulfate of Dy becomes crystallized based on the subsequent heating treatment performed at 60°C. It is thereby possible to recover Dy simultaneously with Nd. Here, the recovery rate of Dy was 70%.

In addition, when this kind of filtering/electrolysis process is repeated, the Pr concentration will rise and, upon rising to roughly 130 g/l, the sulfate of Pr becomes crystallized based on the subsequent heating treatment performed at 60°C. It is thereby possible to also recover Pr together with Dy and Nd. Here, the recovery rate of Pr was 68%.

According to the foregoing process, it was possible to efficiently recover the rare earth metals of Nd, Dy, and Pr from a rare earth-containing scrap, and also attain favorable filterability. In addition, it was possible to use the rare earth elements of Nd, Dy, and Pr as the raw material of a recycled permanent magnet.

(Comparative Example 1)

A rare earth-containing scrap (containing rare earth elements Nd, Dy, and Pr) containing Fe was subject to acid leaching using a large quantity of hydrochloric acid. Consequently, while the elution rate of Nd, Dy, and Pr was 70 to 80%, the elution rate of Fe was also 80%. In addition, with acid leaching, the filterability of the residue was exceedingly inferior, and the treatment of the eluted Fe also became a problem.

[Industrial Applicability]

The present invention yields a significant industrial advantage with respect to the point of being able to extremely easily and efficiently recover a rare earth element because, with the method of the present invention, a metal powder of a rare earth element-containing alloy obtained from scraps such as spent permanent magnets or end materials that arise during manufacture is used, and a rare earth element can be recovered simply by performing electrolysis in an electrolyte which contains the metal powder.

## Claims

1. A method for recovering a rare earth element, comprising:

   mixing metal powder of a rare earth element-containing alloy, also containing iron, with an electrolytic solution which is prepared by mixing an electric conducting salt and pure water, wherein a pH of the electrolyte is adjusted to be between 2 and 8; and
   performing electrolysis at a solution temperature of between 10 and 90°C to elute rare earth elements as ions, wherein iron is eluted in the electrolytic solution and precipitated as ferric hydroxide, and/or electrodeposited on a cathode.

2. The method according to claim 1, wherein electrolysis is performed while agitating the electrolyte.

3. The method for recovering a rare earth element according to claim 1 or 2, further comprising:

   recovering the rare earth element from a solution from which a rare earth element was eluted.

**4.** The method for recovering a rare earth element according to claim 3, further comprising:

recovering the rare earth element via a solvent extraction method or a crystallization method.

**5.** The method of any preceding claim, wherein the salt used is ammonium sulfate, ammonium nitrate, ammonium chloride, sodium chloride, or sodium sulfate.

**6.** The method of claim 4, wherein the extracting agent is 2-ethylhexyl-2-ethylhexyl-phosphonic acid.

**7.** The method of any preceding claim, wherein stainless steel, titanium or graphite is used as the negative electrode.


**Patentansprüche**

**1.** Verfahren zur Rückgewinnung eines Seltenerdelements, umfassend:

Mischen von Metallpulver einer seltenerdelementhaltigen Legierung, die auch Eisen enthält, mit einer elektrolytischen Lösung, die durch Mischen eines elektrisch leitenden Salzes und reinen Wassers hergestellt wird, worin ein pH des Elektrolyts auf zwischen 2 und 8 eingestellt ist; und
Durchführen einer Elektrolyse bei einer Lösungstemperatur von zwischen 10 und 90 °C, um Seltenerdelemente als Ionen zu eluieren, worin Eisen in der elektrolytischen Lösung eluiert wird und als Eisenhydroxid ausgefällt und/oder auf einer Kathode galvanisch abgeschieden wird.

**2.** Verfahren nach Anspruch 1, worin eine Elektrolyse während des Rührens des Elektrolyts durchgeführt wird.

**3.** Verfahren zur Rückgewinnung eines Seltenerdelements nach Anspruch 1 oder 2, ferner umfassend:

Rückgewinnung des Seltenerdelements aus einer Lösung, aus der ein Seltenerdelement eluiert wurde.

**4.** Verfahren zur Rückgewinnung eines Seltenerdelements nach Anspruch 3, ferner umfassend:

Rückgewinnung des Seltenerdelements über ein Lösungsmittelextraktionsverfahren oder ein Kristallisationsverfahren.

**5.** Verfahren nach einem vorhergehenden Anspruch, worin das verwendete Salz Ammoniumsulfat, Ammoniumnitrat, Ammoniumchlorid, Natriumchlorid oder Natriumsulfat ist.

**6.** Verfahren nach Anspruch 4, worin das Extraktionsmittel 2-Ethylhexyl-2-ethylhexyl-phosphonsäure ist.

**7.** Verfahren nach einem vorhergehenden Anspruch, worin rostfreier Stahl, Titan oder Graphit als negative Elektrode verwendet wird.


**Revendications**

**1.** Un procédé de récupération d'un élément de terre rare, consistant à :

mélanger la poudre métallique d'un alliage contenant un élément de terre rare, contenant aussi du fer, avec une solution électrolytique qui est préparée en mélangeant un sel conducteur électrique et de l'eau pure, dans lequel le pH est ajusté pour être compris entre 2 et 8 ; et
effectuer une électrolyse à une température de la solution comprise entre 10 et 90°C pour éluer des éléments de terre rare en tant qu'ions, dans lequel le fer est élué dans la solution électrolytique et précipité sous forme d'hydroxyde ferrique, et/ou déposé par électrolyse sur une cathode.

**2.** Le procédé selon la revendication 1, dans lequel l'électrolyse est effectuée pendant l'agitation de l'électrolyte.

**3.** Le procédé de récupération d'un élément de terre rare selon la revendication 1 ou 2, consistant en outre à :

récupérer l'élément de terre rare d'une solution de laquelle un élément de terre rare a été élué.

4. Le procédé de récupération d'un élément de terre rare selon la revendication 3, consistant en outre à :

récupérer l'élément de terre rare via un procédé d'extraction par solvant ou un procédé de cristallisation.

5. Le procédé selon l'une quelconque des revendications précédentes, dans lequel le sel utilisé est du sulfate d'ammonium, du nitrate d'ammonium, du chlorure d'ammonium, du chlorure de sodium ou du sulfate de sodium.

6. Le procédé selon la revendication 4, dans lequel l'agent d'extraction est l'acide phosphonique 2-éthylhexyle-2-éthylhexyle.

7. Le procédé selon l'une quelconque des revendications précédentes, dans lequel de l'acier inoxydable, du titane ou du graphite est utilisé comme électrode négative.

## REFERENCES CITED IN THE DESCRIPTION

**Patent documents cited in the description**

- JP H514777 B
- JP S6283433 B
- JP 4287749 B
- JP 2002060855 A
- JP S5967384 B
- EP 0042747 A
- US 3616326 A

**Non-patent literature cited in the description**

- Formation cause, composition analysis and comprehensive utilization of rare earth solid wastes. **XU TAO et al.** JOURNAL OF RARE EARTHS. INTERNATIONAL ACADEMIC PUBLISHERS, 01 December 2009, vol. 27, 1096-1102